# EUROPÄISCHE PATENTSCHRIFT

(11) **EP 0 753 366 B1**
(45) Veröffentlichungstag und Bekanntmachung des Hinweises auf die Patenterteilung: **19.08.1998**
(21) Anmeldenummer: 96110110.2
(22) Anmeldetag: 22.06.1996
(51) Int. Cl.: B23B 27/16

(54) **Spanabhebendes Schneidwerkzeug**
Chip-forming cutting tool
Outil de coupe par enlèvement de copeaux

(30) Priorität: 08.07.1995 DE 19524945
(43) Veröffentlichungstag der Anmeldung: 15.01.1997
(73) Patentinhaber: CERASIV GmbH INNOVATIVES KERAMIK-ENGINEERING, D-73207 Plochingen (DE)
(72) Erfinder: Grün, Erich, 2384 Breitenfurt (AT); Müller, Rolf, 72070 Tübingen (DE)
(74) Vertreter: Scherzberg, Andreas, Dr.

(56) Entgegenhaltungen:
- EP-A- 0 075 177
- EP-A- 0 402 934
- DE-A- 3 740 814

## Beschreibung

Die Erfindung betrifft ein spanabhebendes Schneidwerkzeug nach dem Oberbegriff des Anspruchs 1.

Aus der EP-A1-0 075 177 ist ein gattungsgemäßes Schneidwerkzeug mit Klemmhalter bekannt, der eine Ausnehmung zur Aufnahme einer keramischen Schneidplatte aufweist. Die Schneidplatte ist mit einer Spannmulde versehen, in die ein Ansatz einer Spannpratze eingreift. Über eine Spannschraube ist die Spannpratze auf dem Klemmhalter befestigt. Der Ansatz der Spannpratze berührt punktförmig die Spannmulde, wobei die Berührung derart erfolgt, daß eine Kraftkomponente die Schneidplatte in die Ausnehmung zieht. Dies ist dadurch erreicht, daß der Berührungspunkt zwischen Muldenboden und Schneidplatten-oberfläche erfolgt.

Aus der Broschüre "Drehwerkzeuge mit integriertem Klemmsystem", Cerasiv GmbH Innovatives Keramik-Engineering, Produktbereich SPK-Werkzeuge, D-73061 Ebersbach/Fils, Gottlieb-Haefele-Str.7, Februar 1994, Seite 13, ist neben dem oben beschriebenen Klemmsystem auch ein Klemmsystem für Schneidplatten ohne Spannmulde gezeigt. Es wird derselbe Klemmhalter verwendet, wie oben beschrieben. Das Klemmsystem unterscheidet sich jedoch durch eine Druckplatte, die an der Spannpratze befestigt ist. Diese Druckplatte drückt mit einer planen Fläche die Schneidplatte auf den Klemmhalter und hat nur die Aufgabe, einen Andruck senkrecht zur Schneidplatte zu gewährleisten, so daß die Schneidplatte nicht aus dem Klemmhalter rutscht.

Aus der JP-B-50-150 085 ist ein spanabhebendes Schneidwerkzeug bekannt, bei dem eine Spannpratze so im Klemmhalter gehalten ist, daß diese in Richtung Spannschraube durch ein zusätzliches Spannbauteil, das zwischen Schraubenkopf und Spannpratze angeordnet ist, kraftbeaufschlagt wird. Die Spannpratze greift direkt mit einer Erweiterung in eine Bohrung der Schneidplatte ein.

Beim gattungsgemäßen Stand der Technik, d.h. bei Spannpratzen, die eine Schneidplattenmulde klemmen, besteht der Nachteil, daß der dem Werkstück am nächsten liegende Bereich der Nase der Spannpratze durch den Aufprall der Späne ausgewaschen wird, d.h., daß ein Materialabtrag entsteht, der den in die Spannmulde eingreifenden Ansatz der Spannpratze im Extremfall brechen läßt.

Die Spannpratze baut zudem noch sehr hoch, so daß hierdurch eine Spanabfuhr erschwert wird. Außerdem besteht insbesondere bei langspanenden Werkstoffen die Gefahr, daß sich ein Span in den Spalt an der Berührungsstelle des Ansatzes der Spannpratze mit der Spannmulde einklemmt. Dies führt dann zu einem Spänestau, der die Werkstückoberfläche beschädigen kann oder zu einem Bruch der Spannpratze führt.

Der Erfindung liegt die Aufgabe zugrunde, ein Schneidwerkzeug nach dem Oberbegriff des Anspruchs 1 derart zu verbessern, daß die zum Werkstück gewandte Vorderseite der Spannpratze weitgehend vor den Spänen geschützt ist und dabei ein optimaler Sitz der Schneidplatte im Klemmhalter gewährleistet ist.

Erfindungsgemäß wird diese Aufgabe dadurch gelöst, daß an der Spannpratze eine Spannplatte befestigt ist, die auf der Schneidplatte aufliegt, daß die Spannpratze die Spannplatte in Richtung Spannschraube zieht, daß auf der zur Schneidplatte gewandten Unterseite die Spannplatte mit einem Nocken versehen ist, der mit der Spannmulde bzw. der Bohrung in spannender Berührung steht und daß die der Spannpratze vorgelagerte Oberseite der Spannplatte höher als die unterhalb der Spannpratze angeordnete Oberfläche der Spannplatte ist, so daß das Vorderteil der Spannpratze vor aufprallenden Spänen geschützt ist.

Durch die Auflage der Spannplattenunterseite auf der Schneidplattenoberseite kann immer nur eine Relativbewegung in der Ebene der Schneidplattenoberseite stattfinden, so daß der Berührungspunkt des Nockens mit der Mulde bzw. der Bohrung örtlich in vorteilhafterweise eingeschränkt ist. Die Höhe des Nockens an der Spannplatte ist erfindungsgemäß so gewählt, daß sie zwischen dem Abstand Muldenboden zu Muldenoberseite liegt. Hierdurch wird die Schneidplatte immer von der Spannplatte bzw. der Spannpratze in den Schneidplattensitz gezogen. Dies ist dadurch bewirkt, daß die Spannplatte auf der Oberseite eine schräge Ebene bzw. Kerbe aufweist, in die der Ansatz der Spannpratze so eingreift, daß eine Kraftkomponente in Richtung Spannschraube erzeugt ist. Die Spannplatte und damit auch die Schneidplatte sind somit in Richtung Spannschraube kraftbeaufschlagt. Der Nocken an der Spannplatte berührt dabei die Spannmulde im Bereich der geneigten bzw. gekrümmten Übergangsfläche, die sich vom Muldenboden zur Muldenoberseite erstreckt.

Erfindungsgemäß erfolgt die Berührung des Nockens der Spannplatte mit der Spannmulde bzw. der Bohrung punktförmig, linienförmig oder flächenförmig. Vorteilhafterweise ist hierzu der Nocken im Berührungspunkt mit der Spannmulde bzw. der Bohrung zylindrisch, tonnen- oder kugelförmig geformt. Die Spannmulde muß natürlich daran angepaßt sein.

Die Breite des Nockens der Spannplatte ist kleiner als die Breite der Spannmulde oder Bohrung, so daß der Nocken in die Spannmulde bzw. die Bohrung eingreifen kann. Unter Spannmulde wird hier auch eine Nut in der Schneidplatte verstanden.

Zum Schutz der Vorderseite der Spannpratze deckt vorteilhafterweise die Spannplatte die Spannmulde bzw. die Bohrung mindestens nahezu vollständig ab. Zur verbesserten Abfuhr der Späne geht erfindungsgemäß die dem Werkstück zugewandte Außenkontur der Spannplatte mit Abschrägungen in die der Spannpratze vorgelagerte Oberseite der Spannplatte über. Hierbei ist die der Spannpratze vorgelagerte Oberseite der Spannplatte höher als die unterhalb der Spannpratze angeordnete Oberfläche der Spannplatte, so daß das Vorderteil der Spannpratze vor aufprallenden Spänen geschützt ist.

Weitere Merkmale der Erfindung ergeben sich aus den Figuren, die nachfolgend beschrieben werden. Es zeigt:
- Fig. 1: einen Ausschnitt aus einem Schneidwerkzeug mit eingelegter Schneidplatte, die über eine Spannpratze und Spannplatte im Plattensitz befestigt ist,
- Fig. 2: eine Draufsicht auf eine prismatische Schneidplatte, deren Spannmulde von einer Spannplatte mit Nocken abgedeckt wird,
- Fig. 3: einen vergrößerten Ausschnitt aus Fig. 1 gemäß dem mit III gekennzeichneten Kreis,
- Fig. 4: einen Schnitt durch die Spannplatte mit Nocken und Schneidplatte gemäß der Schnittlinie IV - IV aus Fig. 2,
- Fig. 5: eine Spannplatte mit zylindrischem oder halbkugelförmigem Nocken, der in die zylindrische Bohrung einer Schneidplatte eingreift und
- Fig. 6: eine Spannplatte mit halbkugelförmigem Nocken, der in eine kegelförmige Bohrung einer Schneidplatte eingreift.

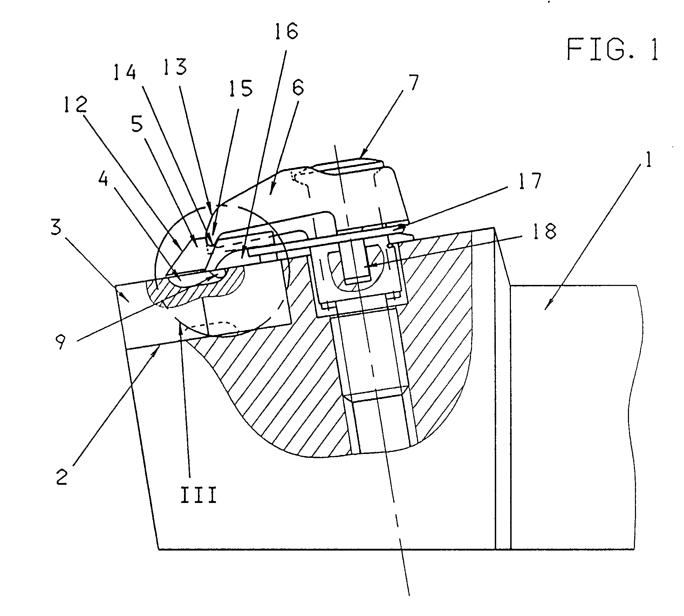

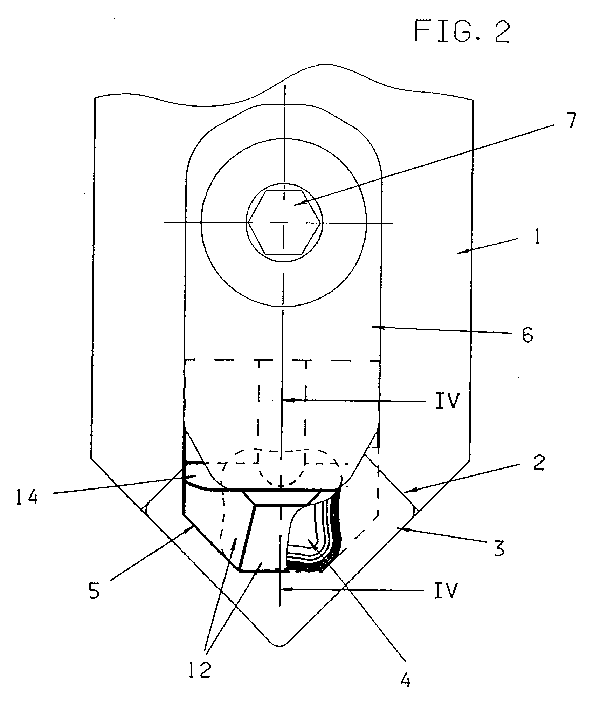

Fig. 1 zeigt einen Ausschnitt aus einem Schneidwerkzeug mit einem Klemmhalter 1, in dem eine Ausnehmung 2 zur Aufnahme einer Schneidplatte 3 angeordnet ist. Auf der Oberseite der Schneidplatte 3 ist diese mit einer Spannmulde 4 versehen, in die ein Nocken 9 einer Spannplatte 5 eingreift. Die Spannplatte 5 ist wiederum an einer Spannpratze 6 befestigt, die drehfest über eine Spannschaube 7 im Klemmhalter 1 festliegt. Die Spannplatte 5 hat auf ihrer Oberseite eine Längs- und eine Quernut. In die Längsnut greift ein Steg der Spannpratze 6 ein. Außerdem ist an der Spannpratze 6 ein Ansatz 15 in Querrichtung angeordnet. Dieser Ansatz 15 greift in die Quernut bzw. Kerbe 14 in der Spannplatte 5 so ein, daß sich eine Kraftkomponente in Richtung zur Spannschraube 7 ergibt (siehe Fig. 2 bis 6). Die Spannplatte 5 wird somit durch den Ansatz 15 in Verbindung mit der Kerbe 14 immer in Richtung Spannschraube 7 gezogen. An den beiden Längsseiten der Spannplatte 5 ist jeweils eine Ausnehmung 16 angeordnet, in die ein Federelement 17 in Form eines U-Schenkels eingreift. Durch dieses Federelement 17 wird die Spannplatte 5 nach oben an die Spannpratze 6 gedrückt.

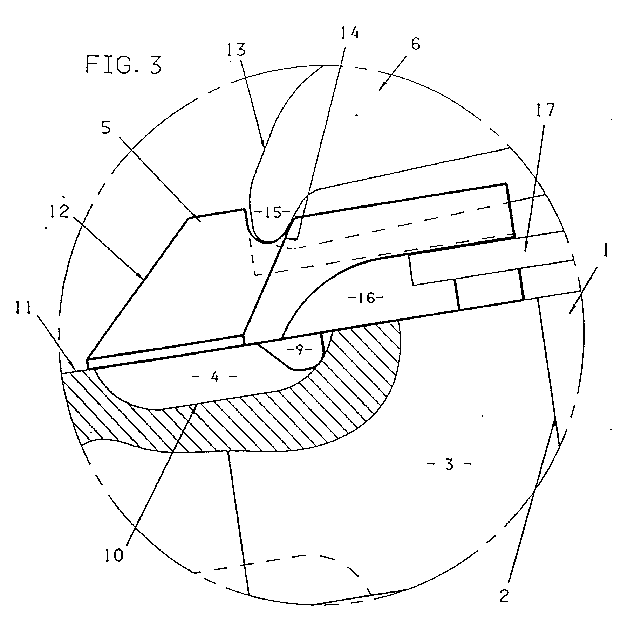

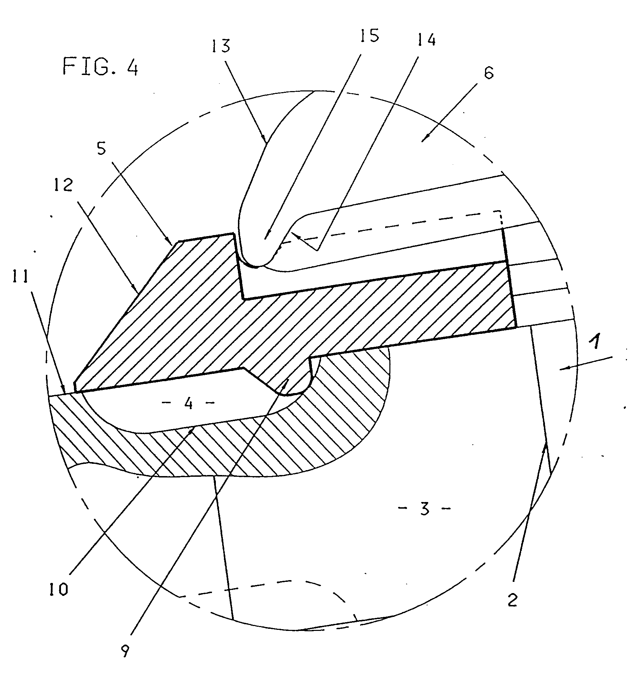

Erfindungsgemäß ist auf der Unterseite, d.h. auf der zur Schneidplatte 3 gewandten Seite der Spannplatte 5 ein Nocken 9 angeordnet. Die Höhe dieses Nockens 9 ist so gewählt, daß sie zwischen dem Abstand Muldenboden 10 zu Muldenoberseite 11 liegt (siehe hierzu die Figuren 3 und 4), wobei eine spannende Berührung eintritt. Der Nocken an der Spannplatte berührt dabei die Spannmulde im Bereich der geneigten bzw. gekrümmten Übergangsfläche, die sich vom Muldenboden zur Muldenoberseite erstreckt.

Die Spannplatte 5 liegt mit ihrer Unterseite voll auf der Schneidplattenoberseite auf und bedeckt die Spannmulde 4 vollständig. Die Berührung des Nockens 9 der Spannplatte 5 mit der Spannmulde 4 kann punktförmig, linienförmig oder flächenförmig sein. Mit einer punktförmigen Berührung wurden die besten Ergebnisse erzielt. Der Nocken 9 kann hierzu an seinem Berührungspunkt zylindrisch, tonnen- oder kugelförmig ausgebildet sein. Hierzu angepaßt muß natürlich die Spannmulde 4 ausgebildet sein. Die Breite des Nockens 9 ist selbstverständlich kleiner als die Breite der Spannmulde 4, damit der Nocken 9 in die Spannmulde 4 eingreifen kann.

Zur verbesserten Spanabfuhr ist die dem nicht gezeigten Werkstück zugewandte Außenkontur der Spannplatte 5 mit Abschrägungen 12 versehen, die in die der Spannpratze 6 vorgelagerte Oberseite der Spannplatte 5 übergehen. Zum weiteren Schutz vor anfallenden Spänen ist die der Spannpratze 6 vorgelagerte Oberseite der Spannplatte 5 höher als die unterhalb der Spannpratze 6 angeordnete Oberfläche der Spannplatte 5. Die der Spannpratze 6 vorgelagerte Oberseite der Spannplatte 5 bildet somit eine Art Schutzschild.

Damit sich die Spannpratze 6 auf den Klemmhalter 1 nicht verdreht, sind an den Flanken der Spannpratze 6 Rippen 18 angebracht, die in entsprechenden Nuten im Klemmhalter 1 eingreifen.

Fig. 2 zeigt eine Draufsicht auf eine prismatische Schneidplatte 3, deren Spannmulde 4 von einer Spannplatte 5 mit Nocken abgedeckt ist. Gut zu erkennen sind die Abschrägungen 12 auf der Vorderseite der Spannplatte 5. Die hier gezeigte Ausführungsform ist mit der in Fig. 1 gezeigten identisch.

Die Figuren 3 und 4 zeigen jeweils einen Querschnitt durch das Schneidwerkzeug, wie in Fig. 1, jedoch im vergrößerten Maßstab. In Fig. 4 ist ein Schnitt entlang der Schnittlinie IV - IV von Fig. 2 und in Fig. 3 ist ein vergrößerter Ausschnitt aus Fig. 1 gemäß dem mit III gekennzeichneten Kreis gezeigt.

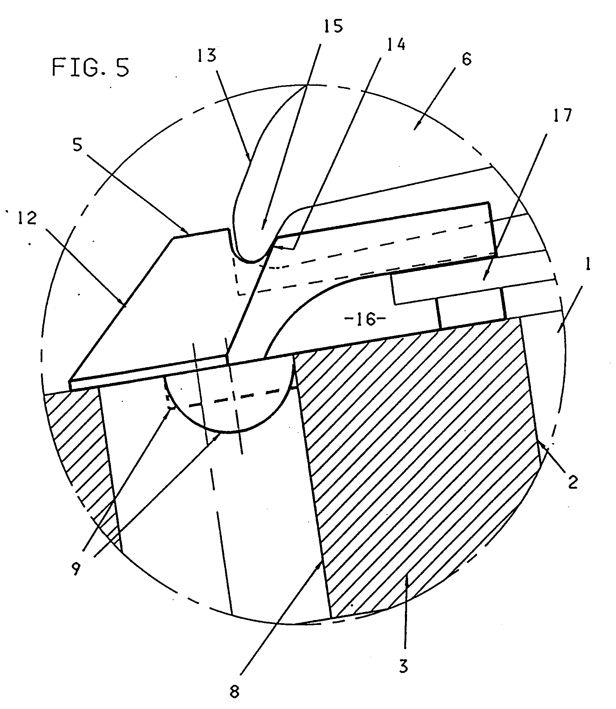

Fig. 5 zeigt im Querschnitt eine Spannplatte 5 mit zylindrischem oder halbkugelförmigem Nocken 9, der in eine zylindrische Bohrung 8 einer Schneidplatte 3 eingreift. Die Ausführung des zylindrischen Nockens 9 ist gestrichelt dargestellt. Die Höhe des Nockens 9 ist bei dieser Ausführungsform von untergeordneter Bedeutung. Es muß jedoch eine spannende Berührung erreicht werden. Ansonsten ist diese Ausführungsform mit den vorher gezeigten identisch.

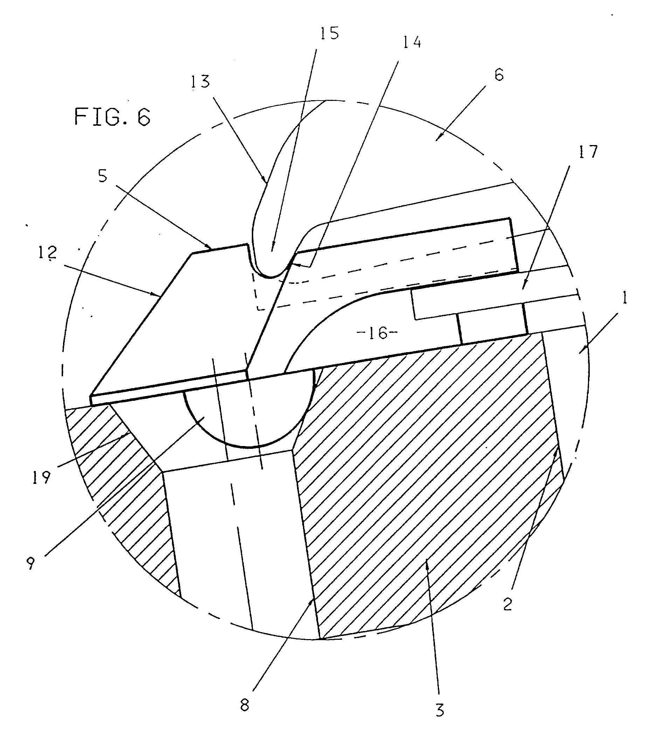

Fig. 6 zeigt eine mit Fig. 5 vergleichbare Ausführungsform, nur greift hier der halbkugelförmige Nocken 9 in eine im oberen Bereich der Bohrung 8 angebrachte kegelförmige Bohrung bzw. Erweiterung 19 ein. Ansonsten ist auch diese Ausführungsform mit den vorher gezeigten identisch. Die Bohrung bzw. Erweiterung 19 kann auch zweckmäßigerweise kegelförmig, ballig oder dergleichen ausgebildet sein.

## Patentansprüche

1. Spanabhebendes Schneidwerkzeug, insbesondere Drehmeißel, im wesentlichen bestehend aus einem Klemmhalter (1), der eine Ausnehmung (2) zur Aufnahme einer Schneidplatte (3) aufweist, wobei die Schneidplatte (3) mit einer Spannmulde (4) oder einer Bohrung (8) versehen ist, die von einer Spannpratze (6) im Klemmhalter (1) gehalten ist und die Spannpratze (6) über eine Spannschraube (7) auf dem Klemmhalter (1) festliegt, **dadurch gekennzeichnet,**
- daß an der Spannpratze (6) eine Spannplatte (5) befestigt ist, die auf der Schneidplatte (3) aufliegt,
- daß die Spannpratze (6) die Spannplatte (5) in Richtung Spannschraube (7) zieht,
- daß auf der zur Schneidplatte (3) gewandten Unterseite die Spannplatte (5) mit einem Nocken (9) versehen ist, der mit der Spannmulde (4) bzw. der Bohrung (8) in spannender Berührung steht und
- daß die der Spannpratze (6) vorgelagerte Oberseite der Spannplatte (5) höher als die unterhalb der Spannpratze (6) angeordnete Oberfläche der Spannplatte (5) ist, so daß das Vorderteil (13) der Spannpratze (6) vor aufprallenden Spänen geschützt ist.

2. Schneidwerkzeug nach Anspruch 1, **dadurch gekennzeichnet,** daß die Höhe des Nockens (9) an der Spannplatte (5) zwischen dem Abstand Muldenboden (10) zu Muldenoberseite (11) liegt.

3. Schneidwerkzeug nach einem der Ansprüche 1 oder 2, **dadurch gekennzeichnet,** daß die Berührung des Nockens (9) der Spannplatte (5) mit der Spannmulde (4) bzw. der Bohrung (8) punktförmig, linienförmig oder flächenförmig erfolgt.

4. Schneidwerkzeug nach einem der Ansprüche 1 bis 3, **dadurch gekennzeichnet**, daß der Nocken (9) der Spannplatte (5) im Berührungspunkt mit der Spannmulde (4) bzw. der Bohrung (8) zylindrisch, tonnen- oder kugelförmig geformt ist.

5. Schneidwerkzeug nach einem der Ansprüche 1 bis 4, **dadurch gekennzeichnet,** daß die Breite des Nockens (9) der Spannplatte (5) kleiner als die Breite der Spannmulde (4) bzw. die Bohrung (8) ist.

6. Schneidwerkzeug nach einem der Ansprüche 1 bis 5, **dadurch gekennzeichnet,** daß die Spannplatte (5) die Spannmulde (4) bzw. die Bohrung (8) mindestens nahezu vollständig abdeckt.

7. Schneidwerkzeug nach einem der Ansprüche 1 bis 6, **dadurch gekennzeichnet,** daß die dem Werkstück zugewandte Außenkontur der Spannplatte (5) mit Abschrägungen (12) in die der Spannpratze (6) vorgelagerte Oberseite der Spannplatte (5) übergeht.

8. Schneidwerkzeug nach einem der Ansprüche 1 bis 7, **dadurch gekennzeichnet,** daß die Spannplatte (5) auf der Oberseite eine schräge Ebene oder eine Kerbe (14) aufweist, in die ein Ansatz (15) der Spannpratze (6) so eingreift, daß eine Kraftkomponente in Richtung Spannschraube (7) erzeugt ist.

## Claims

1. Chip-removing machining tool, especially a lathe tool, essentially consisting of a clamping holder (1), which has a recess (2) for accommodating a cutting plate (3), the cutting plate (3) being provided with a gripping trough (4) or a bore (8), which is held in the clamping holder (1) by a gripping claw (6), and the gripping claw (6) being fixed in position on the clamping holder (1) by means of a gripping screw (7), **characterised in that**
- to the gripping claw (6) there is fastened a gripping plate (5) lying on top of the cutting plate (3),
- the gripping claw (6) draws the gripping plate (5) in the direction towards the gripping screw (7),
- on its lower face directed towards the cutting plate (3), the gripping plate (5) is provided with a nose (9), which is in gripping contact with the gripping trough (4) or the bore (8), and
- the upper face of the gripping plate (5) located in front of the gripping claw (6) is higher than the surface of the gripping plate (5) arranged below the gripping claw (6) so that the front portion (13) of the gripping claw (6) is protected against impacting chips.

2. Machining tool according to claim 1, **characterised in that** the height of the nose (9) on the gripping plate (5) is between the distance from the bottom (10) of the trough to the top (11) of the trough.

3. Machining tool according to either claim 1 or claim 2, **characterised in that** the nose (9) of the gripping plate (5) contacts the gripping trough (4) or the bore (8) at a point, on a line or over an area.

4. Machining tool according to any one of claims 1 to 3, **characterised in that**, at the point of contact with the gripping trough (4) or the bore (8), the nose (9) of the gripping plate (5) is shaped cylindrically, in the form of a barrel or spherically.

5. Machining tool according to any one of claims 1 to 4, **characterised in that** the width of the nose (9) of the gripping plate (5) is less than the width of the gripping trough (4) or the bore (8).

6. Machining tool according to any one of claims 1 to 5, **characterised in that** the gripping plate (5) covers the gripping trough (4) or the bore (8) at least almost completely.

7. Machining tool according to any one of claims 1 to 6, **characterised in that** transition of the outer contour of the gripping plate (5) facing the workpiece to the upper face of the gripping plate (5) located in front of the gripping claw (6) is by means of chamfers (12).

8. Machining tool according to any one of claims 1 to 7, **characterised in that** the upper face of the gripping plate (5) has an angled plane or a notch (14), in which a projection (15) of the gripping claw (6) engages so that a force component is generated in the direction towards the gripping screw (7).

## Revendications

1. Outil d'usinage par enlèvement de copeaux, notamment outil de tournage, composé pour l'essentiel d'un corps d'outil (1) qui présente un évidement (2) destiné à recevoir une plaquette amovible (3), la plaquette amovible (3) étant pourvue d'une cuvette de serrage (4) ou d'un trou (8) et étant tenue sur le corps d'outil (1) par une bride de serrage (6) et la bride de serrage (6) étant fixée au corps d'outil (1) au moyen d'une vis de serrage (7), caractérisé par le fait
- qu'une plaque de serrage (5) qui repose sur la plaquette amovible (3) est fixée à la bride de serrage (6),
- que la bride de serrage (6) tire la plaque de serrage (5) en direction de le vis de serrage (7),
- que la plaque de serrage (5), sur sa face inférieure tournée vers la plaquette amovible (3) est pourvue d'une saillie (9) qui est en contact de serrage avec la cuvette de serrage (4) ou le trou (8) et
- que la face supérieure de la plaque de serrage (5) située en avant de la bride de serrage (6) est plus haute que la surface de la plaque de serrage (5) située sous la bride de serrage (6), de sorte que la partie antérieure (13) de la bride de serrage (6) est protégée contre les impacts des copeaux.

2. Outil de coupe par enlèvement de copeaux selon la revendication 1, caractérisé par le fait que la hauteur de la saillie (9) sur la plaque de serrage (5) se situe entre la distance séparant le fond de la cuvette de serrage (10) du bord supérieur de la cuvette de serrage (11).

3. Outil de coupe par enlèvement de copeaux selon une des revendications 1 ou 2, caractérisé par le fait que le contact de la saillie (9) de la plaque de serrage (5) avec la cuvette de serrage (4) ou le trou (8) est ponctuel, linéaire ou surfacique.

4. Outil de coupe par enlèvement de copeaux selon une des revendications 1 à 3, caractérisé par le fait que la saillie (9) de la plaque de serrage (5), au point de contact avec la cuvette de serrage (4) ou avec le trou (8), a une conformation cylindrique, en tonneau ou sphérique.

5. Outil de coupe par enlèvement de copeaux selon une des revendications 1 à 4, caractérisé par le fait que la largeur de la saillie (9) de la plaque de serrage (5) est inférieure à la largeur de la cuvette de serrage (4) ou du trou (8).

6. Outil de coupe par enlèvement de copeaux selon une des revendications 1 à 5, caractérisé par le fait que la plaque de serrage (5) couvre au moins presque totalement la cuvette de serrage (4) ou le trou (8).

7. Outil de coupe par enlèvement de copeaux selon une des revendications 1 à 6, caractérisé par le fait que le contour extérieur de la plaque de serrage (5) tourné vers la pièce se raccorde par des surfaces inclinées (12) à la face supérieure de la plaque de serrage (5) placée en avant de la bride de serrage (6).

8. Outil de coupe par enlèvement de copeaux selon une des revendications 1 à 7, caractérisé par le fait que la plaque de serrage (5), sur sa face supérieure, présente un plan incliné ou une encoche (14) dans laquelle pénètre un talon (15) de la bride de fixation (6) de manière à produire une composante de force en direction de la vis de bridage (7).
